Europäisches Patentamt

European Patent Office

Office européen des brevets

(11) Publication number: **0 150 978**
A2

# (12) EUROPEAN PATENT APPLICATION

(21) Application number: 85300430.7

(22) Date of filing: 23.01.85

(51) Int. Cl.⁴: **C 09 J 3/14, C 09 J 7/02**

(30) Priority: 27.01.84 GB 8402176

(43) Date of publication of application: 07.08.85
Bulletin 85/32

(84) Designated Contracting States: **AT BE CH DE FR GB IT LI LU NL SE**

(71) Applicant: **R. & I. Connell Ltd, Ashton Road Harold Hill, Romford Essex RM3 8UJ (GB)**

(72) Inventor: **Caton, Peter Cyril Lear, 22 Clayburn Circle, Basildon Essex (GB)**
Inventor: **Summers, Michael William, 2 High Meadow, Billericay Essex (GB)**

(74) Representative: **Coxon, Philip et al, Eric Potter & Clarkson 14 Oxford Street, Nottingham NG1 5BP (GB)**

(54) **Adhesive tapes.**

(57) A pressure-sensitive adhesive composition comprising a PVC base polymer, a structured ehtlyene vinyl acetate copolymer and a plasticiser.

EP 0 150 978 A2

0150978

-1-

## ADHESIVE TAPES

This invention relates to pressure-sensitive adhesives and articles coated therewith, such as adhesive tapes.

Double sided adhesive tapes having a layer of pressure-sensitive adhesive on opposed faces thereof are used for a number of applications including the adhesion of floor coverings to a floor. There are many types of adhesive employed with such tapes, including natural and synthetic rubber and acrylic-based adhesives.

From a production point of view, it is generally preferred to utilise adhesives which can be applied to a tape by a hot-melt technique. Generally the polymers used for such tapes are ethylene-vinyl acetates and block copolymers such as styrene-butadiene block copolymers and styrene-isoprene block copolymers. For many applications such adhesives are quite satisfactory but problems do arise when adhering PVC (polyvinyl chloride)-based materials such as PVC backed floor coverings. One of the problems is the bleeding of plasticiser from the PVC into the adhesive layer causing degradation of the adhesive. Conventional alternative systems, such as acrylic, saturated vinyl esters and certain EVA based adhesives can be used but are expensive.

According to the present invention we provide a pressure-sensitive adhesive composition comprising a PVC base polymer, a structured ethylene vinyl acetate copolymer and a plasticiser.

The PVC base polymer is advantageously a vinyl chloride vinyl acetate copolymer or graft copolymer with a vinyl acetate content of preferably 5 to 40%, more preferably 10 to 20%, by weight.

Other PVC base polymers which can be used are polyvinyl chloride homopolymer and copolymers and graft copolymers of vinyl chloride with acrylic esters, polyacrylates, vinylidene chloride, diethyl fumarate or diethyl maleate, and PVC terpolymers.

The structured ethylene vinyl acetate copolymer is one which contains segments of relatively high vinyl acetate content and segments of relatively low vinyl acetate content as opposed to ethylene vinyl acetate copolymers in which the vinyl acetate groups are randomly distributed.

Preferably the proportions of PVC base polymer to ethylene vinyl acetate is 1:0.3 to 1:2 more preferably 1:0.35 to 1:1.0 by weight.

The adhesive compositions may also contain at least one tackifying resin. The preferred proportion of PVC base polymer to tackifying resin is 1:1.3 to 1:4.5 more preferably 1:2 to 1:3.5 by weight.

The adhesive compositions may also include other additives, such as stabilisers, fillers, pigments, antioxidants and other conventional additives.

The plasticiser preferably comprises one or more phthalate ester plasticisers, such as di-n-butyl phthalate, di-iso-butyl phthalate, di-n-octyl phthalate, di-iso-octyl phthalate, di-nonyl phthalate, di-isi-decyl phthalate, di-tridecyl phthalate, or di-2-methoxyethyl phthalate. Other plasticisers which may be used are phosphate esters plasticisers, including tricresyl phosphate and trioctyl phosphate; adipate plasticisers; azelate plasticisers; oleate plasticisers; sebacate plasticisers, including di-butyl sebacate and di-octyl sebacate; epoxy plasticisers; fatty acid esters plasticisers; glycol derivatives, including poly (propylene glycol) esters; sulphonamide plasticisers; and hydrocarbon and hydrocarbon derivate plasticisers.

The tackifying resins may be any such resins normally used in pressure-sensitive adhesive compositions and are preferably coumarone-indene resins, alpha methyl styrene resins and glycerol rosin esters.

Other tackifying resins which can be used are gum rosin ester resins; including pentaerythritol rosin esters, hydrogenated glycerol rosin esters, hydrogenated pentaerythritol rosin esters, hydrogenated triethylene glyrol rosin esters, disproportionated glycerol rosin esters, disproportionated pentaerythritol rosin esters, disproportionated triethylene glycol rosin esters, polymerised glycerol rosin esters, polymerised pentaerythritol rosin esters, dimerised pentaerythritol rosin esters, glycerol maleic rosin esters, pentaerythritol maleic rosin esters, pentaerythritol fumaric rosin esters, rosin modified glycerol rosin esters, gum rosin, wood rosin, tall oil resin; hydrocarbon resins, including: aliphatic hydrocarbon copolymer resins, aromatic hydrocarbon resins, alkyl aromatic hydrocarbon resins, vinyl toluene/alpha methyl styrene copolymer resins; phenolic modified coumarone-idene resins; phenolic resins, including: novalac phenolic resins; metal resinates, including: calcium resinates, zinc resinates.

Preferred fillers include calcium carbonate (calcite, whiting etc), carbon black, china clay, calcium magnesium carbonate, zinc oxide, barytes, cellulose, talc and ground slate.

Preferred stabilisers include di-butyl tin mercaptides stabilisers, di-butyl tin maleate stabilisers, calcium/zinc stabilisers, amino crotonate based stabilisers, lead base stabilisers and barium/cadmium/zinc based stabilisers. Virtually any organic or inorganic pigment or dye can be used including, titanium dioxide, iron oxide and carbon black. If desired, additional additives may be included, such as expoxidised soya bean oil.

We have found that the adhesives of the present invention provide good adhesion and are highly resistant to plasticiser migration when used with PVC based materials such as vinyl floor coverings, vinyl-backed floor cover-

-4-

ings (e.g. on many carpet tiles), and foam PVC backed carpets. The effect of the composition is to firstly resist the flow of plasticiser by providing an equilibrium level of plasticiser already in the formulation. Secondly, the polymer base is able to absorb a large amount of plasticiser with relatively little effect on the cohesive strength of the adhesive so that it will remain good for the purpose. This is in contrast to a block copolymer-based adhesive which loses the greater part of its cohesion and may even be reduced to a flowing liquid.

Furthermore, because the base polymer is PVC the adhesive is cheaper than an ethylene-vinyl acetate adhesive and is easier to process because of its lower melt viscosity. It also has an adhesion better than that of adhesives in which ethylene-vinyl acetate is the base polymer especially adhesion to PVC based materials.

According to a further aspect of the present invention we provide an article having at least one face provided with a coating thereof a pressure-sensitive adhesive as defined above. The article may be a tape or a sheet-like article such as a floor tile or carpet.

According to a further aspect of the present invention we provide a method of making a self-adhesive article which comprises applying by a hot-melt technique a layer of pressure-sensitive adhesive as defined above to a release sheet, applying the adhesive layer to a face of an article. Alternatively, the face of the article can be coated directly.

A double-sided adhesive tape can be made by applying a further layer of adhesive to the other side of said release sheet or to the other side of the tape and rolling the layers into a roll of double-sided adhesive tape.

Preferred adhesive compositions are formulated as follows:

0150978

-5-

|  | Preferred Range | More Preferred Range |
|---|---|---|
| PVC base polymer | 10-35 | 15-25 |
| Ethylene-vinyl acetate | 6-30 | 6-20 |
| Resin | 30-60 | 40-55 |
| Plasticiser | 10-35 | 15-25 |
| Filler | 0-30 | 0-15 |
| Stabiliser | 0.2-1.0 | 0.3-0.6 |
| Pigment | 0-10 | 0-6 |

The invention is further illustrated with reference to the following Example.

Example 1

The following adhesive formulation was prepared and applied to a tape by means of a hot-melt technique:

|  | % |
|---|---|
| Vinyl chloride/vinyl acetate copolymer | 20 |
| Ethylene-vinyl acetate structured copolymer | 8 |
| Coumarone indene resin | 32 |
| Glycerol rosin ester | 13 |
| Di-n-butyl phthalate | 23 |
| Titanium dioxide | 3.5 |
| Butyltin mercaptide stabiliser | 0.5 |

The adhesive composition can be coated as a single or double sided adhesive tape e.g. coated on a plastic film, a woven or non-woven material or a composite carrier such as a woven fabric-plastic film laminate which may or may not have a release coating on the opposite side of the substrate, and may or may not be protected by a removable liner (such as siliconised paper or film) over the adhesive.

Such a tape can be used for butt joining floor covering materials and can have a wide variety of general uses such as electrical tapes and general strapping tapes. It may also form a graphics material, especially where the substrate is a plasticised PVC film which can be printed for decorative purposes.

-6-

The adhesive composition can also be used to coat a face of an article which is required to be self-adhesive. Such articles include floor tiles and carpet.

-7-

## CLAIMS

1.    A pressure-sensitive adhesive composition comprising a PVC base polymer, a structured ethylene vinyl acetate copolymer and a plasticiser.

2.    A composition according to Claim 1 in which the PVC base polymer is a vinyl chloride/vinyl acetate copolymer or graft copolymer.

3.    A composition according to Claim 2 in which the vinyl acetate content of the PVC base polymer is 5 to 40%, preferably 10 to 20%, by weight.

4.    A composition according to any of Claims 1 to 3 in which the proportion of PVC base polymer to structured ethylene vinyl acetate copolymer is 1:0.3 to 1:2, preferably 1:0.35 to 1:1.0 by weight.

5.    A composition according to any of Claims 1 to 4 which includes at least one tackifying resin.

6.    A composition according to Claim 5 in which the proportion of PVC base polymer to tackifying resin is 1:1.3 to 1:4.5, preferably 1:2 to 1:3.5 by weight.

7.    A composition according to any of Claims 1 to 6 including one or more stabilisers,, fillers, pigments and/or antioxidants.

8.    A self-adhesive article having at least one face carrying a layer of an adhesive composition as claimed in any of Claims 1 to 7.

9.    An article according to Claim 1 in the form of a single or double sided adhesive coated tape.

10. A method of making an article as claimed in Claim 8 which comprises applying to a face of said article a layer of pressure sensitive adhesive as claimed in any of Claims 1 to 7 by means of a hot melt technique.